# EUROPEAN PATENT APPLICATION

(11) **EP 1 182 848 A1**
(43) Date of publication of application: **27.02.2002**
(21) Application number: 00904098.1
(22) Date of filing: 22.02.2000
(51) Int. Cl.: H04M 1/00, H04M 1/02, H04M 1/21, H04B 7/26, G06F 3/00

(54) **PORTABLE TELEPHONE**

(30) Priority: 24.05.1999 JP 14290799; 24.05.1999 JP 14295399; 24.05.1999 JP 14298099
(71) Applicant: Rohm Co., Ltd., Kyoto-shi Kyoto 615-8585 (JP)
(72) Inventor: MIYAKAWA, Shouzou, Rohm Co., Ltd., Kyoto-shi, Kyoto 615-8585 (JP)
(74) Representative: Goddar, Heinz J., Dr.
(86) International application number: JP0001006
(87) International publication number: WO0072554

(57) **Abstract**

A portable telephone 30 in which changing of melodies is easy comprises means 37 for storing melody data of incoming call alert sound and a connector 20 which is capable of externally transmitting analog audio signal. The portable telephone further includes means (41, 34) for entering the digital audio data via a photo receiving member 40 which is provided relative to the connector 20 so that the member 40 can receive light and for writing the digital audio data into the storing means 37 as the melody data. Since the melody data is accepted via existing connector as photo signal, it is possible to substantially automatically enter new melody data for rewriting without increasing the number of exterior parts.

## Description

### Technical Field

The present invention relates to a technology to change melody sounds which are generated by a portable telephone when it receives an incoming call, and in particular to a melody data entry system for portable telephones, which delivers melody data for portable telephone and downloads the delivered melody data into the portable telephone; and a portable telephone which is preferable for the same system.

A term "portable telephone" used herein may include analog or digital portable, mobile or cellular telephones, PHS (personal Handyphone System), phones which are used as child phones for parent phones which are fixed phones.

### Background of the Invention

Portable telephones which are capable of recording and playing back the conversation (JP-A-5-48691 and JP-A-6-6285) and are capable of changing the melodies of sound which are generated for notifying an incoming call have been known as well as stationary telephones. Such portable telephones include communication means which dinamically establishes a wireless phone line, a keyboard on which actuating members such as push buttons are disposed, a memory which is digital storing means for storing and holding melody data of incoming call alert sounds and a playback device for playing back melody by reading the melody data from the memory.

Other than the telephones, some of audio apparatus such as KARAOKE and electronic instruments which use a bar code reader for reading melody data have been known (JP-A-6-4086 and JP-A-8-106288) . Such apparatus are not portable and their bar code readers are not suitable for portable telephones.

These portable telephones are provided with connectors to and from which an external plug terminals of an electrically conductive cable can be inserted and removed, so that voice signals are entered via an externally connectable microphone, or output to devices such as speakers via an externally connectable earphone or headphone. Transmission of analog audio signals are enabled through these means.

Such portable telephones are provided with digital storing means for storing melody data for incoming call alert sound and means for playing back the melody by reading the melody data from the storing means on receipt of an incoming call in order to change the melody as well as the volume of the incoming call alert sound. Rewriting of the melodies in the storing means is conducted by actuation of predetermined push button in accordance with codes of various melodies printed on a brochure.

However, manual actuation is not easy for continuously conducting a data entry working which requires cautions since the portable telephones are made compact in size for their portability. Accordingly, entry of a great amount of melody data or complicated data having sophisticated contents requires an extended period of time and much labor. Mistakes such as misoperation is liable occur, but its correcting is troublesome. Therefore, use of bar code reader or other provisions which enable melody data to be changed even by simple technique which does not rely only manual actuation of keys is conceivable. At this time, this improvement should not be against the tend in reduction in size of the portable telephones. Further, it is preferable to design the portable telephones in view of portability.

The present invention was made to accomplish the above-mentioned objects. It is a purpose of the present invention to implement a portable telephone in which the melody can be easily changed.

### Disclosure of the Invention

The structure, operation and effects of the solving means as defined in Claims 1 to 10 which was invented in order to achieve such objects will now be described.

### [First solving means]

A portable telephone of the first solving means comprises communication means for wireless communication; storing means for holding melody data of incoming call alert sound; playing back means for playing back melody by reading said melody data from said storing means; and a connector which is capable of both or either of outputting or inputting analog audio signals of conversation voice to and from external devices. The portable telephone further includes a photo receiving member which is provided with respect to said connector in such a manner that it is capable of receiving digital light signal such as digital audio data fed to said connector.

In the portable telephone of such first solving means, the digital audio data of the melody data which is needed for rewriting the melody data is automatically entered using the photo receiving number. Since the photo receiving member is provided for existing connector, the necessity to add exterior parts which prevent reduction in size can be eliminated. Since external transmission of conversation voice signal via the connector is conducted by the transmission of analog audio signal of the electrical signals and the external transmission of the melody data via the photo receiving member is conducted by the digital optical transmission, external transmission of the conversation voice signal and ease of its use is not deteriorated even if the photo receiving member is provided for the connector.

This enables new melody data for rewriting to be entered to the portable telephone by minimum simple operation such as mode presetting and automatic data transmission.

### [Second solving means]

A portable telephone of the second solving means is substantially identical with the portable telephone of the above-mentioned first solving means except that it includes means for entering the digital audio data via said photo receiving member for writing the data in said storing means as said melody data with or without being subjected to extraction of given data and conversion of the digital data format.

In the portable telephone of the second solving means, the digital audio data which is fed in the form of optical signal is entered through the photo receiving member and is written into said storing means as melody data. The melody data is thus substantially automatically rewritten. The digital audio players and the like which are used as external devices for sending the digital audio data usually include connectors for outputting digital optical signals in most cases. Accordingly, preparation can be completed only by connecting the devices to each other via compatible cables.

Since only a player is required to rewrite the melody data and any special writing device is not required, it is very convenient. In other words, the operation is not only simple, but also the preparation is easy and convenient as mentioned above.

Accordingly, a portable telephone in which changing of melodies is easy can be implemented in accordance with the present invention.

### [Third solving means]

A portable telephone of the third solving means comprises communication means for wireless communication; and actuating unit such push buttons and the like; storing means for holding melody data of incoming call alert sound; playing back means for reading said melody data from said storing means to play back the melody on reception of an incoming call; and a connector which is capable of both and either of outputting and inputting of analog audio signals of conversation voice to and from external devices. The portable telephone further includes a modulating and demodulating circuit which is directly connected to an indirectly connected to said connector via an appropriate switch circuit so that it can transmit data, for conducting digital modulation or demodulation for said melody data in the audible frequency range.

In the portable telephone of the third solving means, the melody data which is stored in said storing means is digitally modulated by the modulating and demodulating circuit and is externally fed via the connector after it is converted into the signals in the substantially audible frequency range. If an audio recording and playing back device is connected to the connector via an appropriate cable, the melody data is externally transmitted and is recorded similarly to the analog audio signals even when the melody data is digital data. In such a manner, saving of the melody data to an external recording medium is easily conducted without considering compatibility with inner storing format and recording format with external devices.

When the melody data which is recorded by the audio recording and playing back device is played back by the same device or similar device, the melody data is input to the modulating and demodulating circuit via the connector, so that the data is recovered to original digital data. In such a manner, entry of data to be saved is easily conducted.

Also in case in which the inner melody data is erased or overwritten, it is possible to easily save the melody data in an external device using ready audio recording and playing back device and to substantially reenter it any time without manual reentering working. It is not only possible to save the melody data which took much time and labor, but also to exchange the melody with other person's melody by replacing the portable telephone used during recording with that used during playing back. It is possible to contribute to magazines by submitting the recording medium.

Accordingly, a portable telephone in which melodies to be erased can be easily saved and changing of melodies is easy can be implemented in accordance with the present invention.

### [Fourth solving means]

A portable telephone of the fourth solving means is substantially identical with that of the above-mentioned third solving means except that the former includes means for accessing to said storing means to provide said melody data to said modulating and demodulating circuit.

In the portable telephone of the fourth solving means, the melody data which is desired to save is automatically read from the storing means prior to the modulation and demodulation, and the melody data which is played back and automatically input by the audio recording and playing back device which has recorded the melody data therein is returned to the storing means via the modulating and demodulating circuit. This enables the recovery of the saved data to be substantially automatically and easily conducted while tedious manual work is hardly necessary.

According, a portable telephone in which recovery of the erased melody is easily performed and changing of the melody is easy can be implemented.

### [Fifth solving means]

A portable telephone of the fifth solving means comprises communication means for wireless communication; call means which enables communication via said communication means; storing means for holding melody data of incoming call alert sound and playing back means for reading said melody data said storing means to play back the melody on receipt of an incoming call. In this portable telephone, a bar code reading member is directly fixed on a housing or indirectly fixed on the housing by using a circuit board and the like as linking member. The housing is in the form of a box or comprises a plurality of foldable boxes and has said storing means and said playing back means.

Since the reading member is fixedly mounted on the housing so that it is integral with the housing in the portable telephone of the fifth solving means, the portable telephone per se also serves as a scanner scanning device of a bar code reader. When the melody data is rewritten, a printed matter on which necessary data is printed in the form of bar code is prepared and the housing of the portable telephone is held with one hand. When housing of the portable telephone is moved along the bar code printed face while the reading member faces to the bar code printed face, the bar code is read. The data such as melody data corresponding to the bar code is automatically entered into the portable telephone.

Accordingly, new melody data for rewriting can be automatically read and entered by only minimum simple actuation such as movement for scanning without relying only manual entry by key actuation. Integration of the bar code reader including reading member eliminates the necessity of a main body of the bar code reader as well as members for housing such as discrete box or sleeve member used for the scanning unit. Since enhancement of the capability of the portable telephone is achieved without increasing the housing of the portable telephone, it will not prevent the reduction in size of the portable telephone.

Therefore, a portable telephone in which changing of the melodies is easy can be implemented in accordance with the present invention.

### [Sixth solving means]

A portable telephone of the sixth solving means is substantially identical with that of the above-mentioned fifth solving means except that the former is provided with melody data accepting means which enters the data said reading member and writes the data into said storing means as said melody data.

In the portable telephone of the sixth solving means, the data which is recorded in the form of bar code is entered via the reading member and is written into storing means as the melody data. The melody data can be easily rewritten only by scanning the portable telephone along the bar code. Only a printed matter of bar code is required excepting the portable telephone. Carrying a separate bar code, as well as connection working and provision of a power source is not necessary.

Accordingly, if a printed matter having a given form is obtained by purchasing it, only the portable printed matter and the telephone are necessary to rewrite the melody data of the portable telephone. It is convenient to do so since no other special devices and provisions are required. The operation for rewriting the melody data is not only simple, but also its preparation is easy as mentioned above.

Therefore, a portable telephone in which changing of the melodies is easy can be implemented in accordance with the present invention.

### [Seventh solving means]

A portable telephone of the seventh solving means is substantially identical with that of the above-mentioned sixth solving means except that means for causing said playing back means to play back the melody data to be rewritten into said storing means is provided as part of said melody accepting means or separately therefrom.

In the portable telephone of the seventh solving means, the melody data which is entered by reading the bar code is written into said storing means for rewriting of the melody data and is played back by the playing back means at this time. The melody which has been just entered can be immediately listened as the same condition as that when it is actually played back as an incoming call alert sound in the portable telephone in interest.

Even if the melody data is recorded in the form of bar code which is readable for human being it is also possible to determine after listening the correct melody whether or not the melody selection and the data entry was appropriate.

Therefore, the melody data of the portable telephone can be easily and properly changed in accordance with the present invention.

### [Eight solving means]

A portable telephone of the eighth solving means is substantially identical with that of the above-mentioned seventh solving means except that there is provided as part of said melody data accepting means or said call means, or separately therefrom, means which detects an incoming call also during the processing of said melody data accepting means to activate said playing back means in response to the detection of the incoming call during the operation of said melody data accepting means and at this time to cause the melody data provided to said playing back means to be subjected to temporal predetermined processing such as addition of other data such as short buzzer sound or voice guidance before and after the melody or in the course of the melody.

If the portable telephone of the eighth solving means receives an incoming call while it accepts the melody data by reading it, the melody data to be played back is temporarily processed and then played back when the incoming call alert sound is generated.

Since a sound having a melody which is different from that which is generated when stored or storing melody data is only played back, the melody sound which alerts an incoming call can be discriminated from the melody sound for confirming the contents of read bar code.

This prevents the failure to respond the actual incoming call since whether it can be determined the melody sound alerts the incoming call or not even during the accepting of the melody data in which melody sound is generated.

Therefore, a portable telephone in which changing of the melodies and the confirmation thereof can be easily conducted and the failure to respond an actual incoming call is prevented can be implemented in accordance with the present invention.

### [Ninth solving means]

A melody data entry system for portable phones of the ninth solving means comprises a delivery device which is connected to a wired or wireless communication line for delivering melody data to one or more information terminals over the communication line; and information terminal which is stationally or dynamically connected to said communication line; a portable telephone having an externally connecting connector, which is capable of entering the melody data via the connector and storing the melody data to play back it as an incoming call alert sound; dynamic connecting means which is fixedly connected to said information terminal and is removably provided for said portable telephone or is removably provided for both said information terminal and said portable telephone for connecting said information terminal with said portable telephone via said connector so that it can transmit data; an actuation entry device which is capable of inputting to said dynamically connecting means an instruction to transmit the melody data which was just received or has been previously received.

In the melody data entry system for portable telephones of the ninth solving means, a portable telephone, the melodies of which are wanted to change is firstly connected to any information terminal by the dynamic connecting means, then an instruction to transmit appropriate melody data is entered by actuating the actuation entry device of the information terminal.

Since the relevant melody data is delivered over the communication line by the delivery device in response to the transmission instruction and is received by the information terminal and is stored therein, it is entered from the information terminal to the portable telephone via the connector and thereafter stored in the portable telephone so that it is played back as an incoming call alert sound.

Suitable melody data is selected from a large amount of melody data to be delivered and is downloaded into the portable telephone by minimum simple operation such as an input to send a transmission instruction and automatic data transmission without relying upon manual entry. The operation for the input of the transmission instruction is conducted by actuating the actuation entry device of the information terminal.

This makes the operation of the portable telephone less and the melody data is downloaded to the portable telephone even by the less operation. The operation can be easily conducted not by smaller actuation members of the portable telephone, but by larger actuation members of the information terminal.

Therefore, the melody data of the portable telephone can be easily changed in accordance with the present invention.

### [Tenth solving means]

A portable telephone of the tenth solving means comprises communication means for wireless communication; an actuating unit of push buttons; storing means for holding melody data of an incoming call sound; and playing back means for reading said melody data from said storing means to play back the melody. In the portable telephone, there are integrally, separately or combinedly provided means for continuously receiving melody data via said communication means; means for causing said playing back means to play back the received melody data during receiving and immediately thereafter; and means for determining in response to the actuation of said actuating unit whether or not the received melody data which is being played back is to be written into the relevant area of said storing means immediately or after the confirmation.

The portable telephone of the tenth solving means constitutes the melody data entry system for portable telephones together with the delivery device which can be in communication over the wireless communication line. The delivery device is provided with data holding means such as database which holds a great amount of data in such a manner that the data can be added, updated or retrieved, and means for delivering one or more specified or selected melody data to specified or unidentified portable telephones over said wireless telephone line in response to a request from the portable telephone or voluntary factors such as regular delivery.

When a user wants to change the melodies of his or her own portable telephone, he or she connects the portable telephone to the above-mentioned delivery device over the wireless telephone line. This connection is conducted in the same manner as that dialing usual telephone. It necessary, he or she also conducts an operation to additional data such as title number of the desired melody data.

Then, the relevant melody data is directly delivered to the portable telephone by the delivery device over the wireless telephone line. Thus, the melody data can be easily received even by directly connecting to an external delivery device by wireless communication.

When a plurality of pieces of melody data are delivered from the delivery device, the melody data is continuously received by the connected portable telephone, and played back by the playing back means of the portable telephone. Thus,the melodies can be successively listened in the same manner as that they are played back as incoming call alert sounds in the portable telephone. If the user finds favorite melody, it is selected as the melody to be written by appropriately actuating the actuating unit while it is listened or selected as one of candidates to be written.

When melodies which are wanted to accept are restricted to one melody by simple actuation while listening to the melodies from the portable telephone, the melody data is written to the relevant area of the storing means of the portable telephone.

Thereafter, the melody data is stored in the portable telephone and is played back in proper time as an incoming call sound.

This makes the operation of the portable telephone less and the melody data is downloaded to the portable telephone by less operation. It is also possible to confirm the melody without any brochure.

Therefore, the melody data of the portable telephone can be easily changed at any places whether or not there is brochure can be changed in accordance with the present invention.

### Brief Description of the Drawings

Fig. 1(a) is a functional block diagram showing the inner structure of the first embodiment of the portable telephone of the present invention;
Fig. 1 (b) is a detailed view showing the connector of the first embodiment of the portable telephone of the present invention;
Fig. 2(a) is an external view showing the portable telephone shown in Figs. 1 and the use condition thereof;
Fig. 2(b) is a external view showing the portable telephone shown in Figs. 1 and the use condition thereof;
Fig. 3(a) is a functional block diagram showing the second embodiment of the portable telephone of the present invention;
Fig. 3(b) is an external view showing the second embodiment of the portable telephone of the present invention and its use condition;
Fig. 4 is a functional block diagram showing the third embodiment of the portable telephone of the present invention;
Fig. 5 is a block diagram showing the inner structure of the fourth embodiment of the portable telephone of the present invention;
Fig. 6 is a front view showing the appearance of the portable telephone shown in Fig. 5;
Fig. 7 is a schematic view showing the use condition of the portable telephone shown in Fig. 5;
Fig. 8 is a block diagram showing the inner structure of the fifth embodiment of the portable telephone of the present invention;
Fig. 9(a) is a front view showing the appearance of the portable telephone shown in Fig. 8;
Fig. 9(b) is a bottom view showing the appearance of the portable telephone shown in Fig. 8;
Fig. 10 is a schematic structural view showing the whole of the melody data entry system for the portable telephone in the sixth embodiment of the present invention;
Fig. 11 is a block diagram showing the information terminal shown in Fig. 10;
Fig. 12 is a block diagram showing the portable telephone shown in Fig. 10;
Fig. 13 is a schematic structural view showing the whole of the melody data entry system for the portable telephone in the seventh embodiment of the present invention;
Fig. 14 is a block diagram showing the portable telephone shown in Fig. 13;
Fig. 15 is a block diagram showing a modification of the portable telephone shown in Fig. 13;

### Best modes of embodying the Invention

Best modes of embodying the portable telephone of the present invention which is implemented by the solving means will be described in detail by way of following embodiments.

### (First Embodiment)

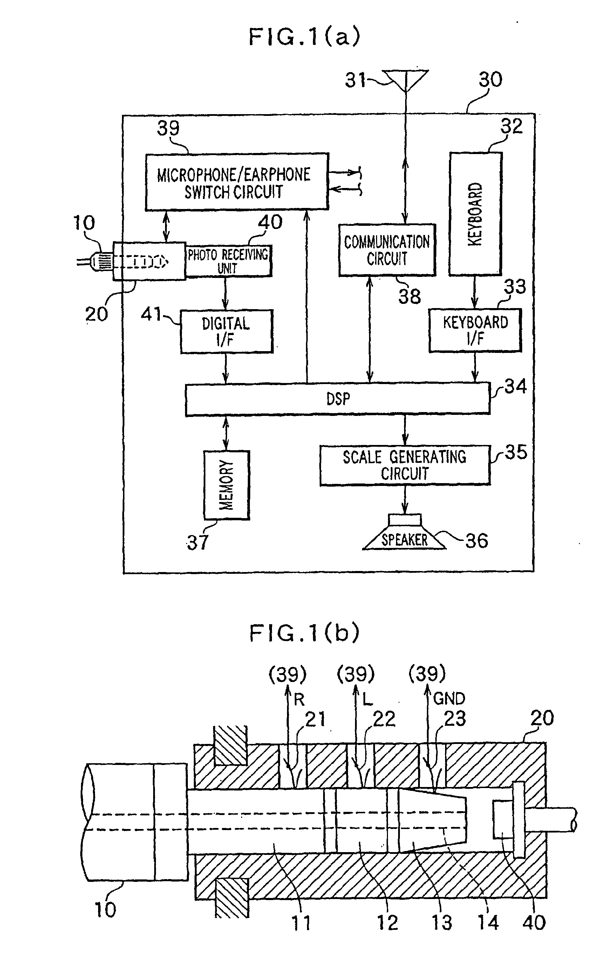

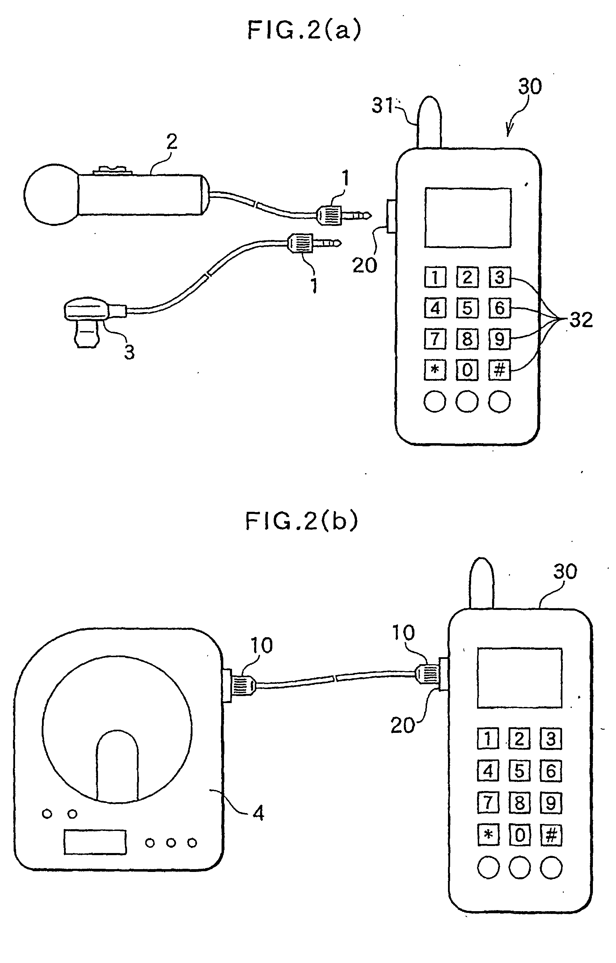

The detailed structure of a first embodiment of the portable telephone of the present invention will be described with reference to the drawings. The first embodiment which is shown in Figs. 1 and Figs. 2 is an embodiment of the above-mentioned first and second solving means.

Figs. 1 shows the inner structure of the first embodiment. Fig. 1(a) is a circuit diagram showing the whole of the apparatus. Fig. 1(b) is a detailed view showing a connector. Both of Fig. 2(a) and 2(b) are external views showing appearance of the apparatus including external connecting units.

The portable telephone 30 (portable telephone) includes following components similarly to the prior art phone in order to support its functions. Detailed description of the components which are identical or similar to those of prior art will be omitted (refer to Fig. 1(a) and 1(b)). Radio communication means includes an antenna 31 and a communication circuit 38 for transmitting and receiving signals to and from a base station, etc. via the antenna 31. An actuating unit for entering phone numbers, etc. includes a key board 32 on which push buttons are disposed and a keyboard interface (I/F) 33. The portable telephone has a speaker 36 for converting the receiving signals into audible sound and a jack 20 (connector) having an externally exposed plug adapting outlet for outputting received signal as an analog signals via a microphone/earphone switching unit 39. The jack 20 and switching circuit 39 are also used for inputting voice signals from an external microphone 2 which is adapted to the jack 39, alternatively of a built-in microphone (not shown).

The portable telephone 30 has an incorporated DSP (digital signal processor) which executes various operations such as necessary communication procedure and calling operation by appropriately controlling and driving the above-mentioned means in order to establish the telephone conversion between both parties . A memory 37 comprising flash memory, etc. which is accessive by DSP 34 to read/write for holding a lot of numbers such as bearer's telephone number and automatically dialed numbers is also incorporated therein. These means is supplied with operating power from a battery (not shown).

The memory 37 also serves as means for storing incoming call alert sound data such as melody data. At this end, necessary part of the memory is reserved. The melody data may be written into relevant area of the memory 37 as digital data which has been pulse code modulated or otherwise. It maybe written by means of devoted jig before being shipped from the factory, or may be rewritten by a user such as purchaser. Specifically, the data at the relevant area of the memory 37 is rewritten in accordance with program processing by DSP 34 if presetting of a given mode and entry of consecutive data is performed by actuating the keyboard 32.

In addition to a synthesizer circuit; a scale generating circuit 35 including a conversion processing circuit which converts digital data into an analog audio signal by performing decoding or demodulation corresponding to the pulse code modulation is incorporated in the portable telephone 30 for generating the melody sound on reception of an incoming call. The DSP 34 is adapted to read the melody data from the memory 37 after confirmation of the incoming call in accordance with its program processing and is also adapted to sequentially deliver the melody data to the scale generating circuit 35. The output from the scale generating circuit 35 is fed to the speaker 36. The scale generating circuit 35 and DSP 34 constitute means for playing back melodies based upon the melody data stored in the memory 37.

In addition to these means, a photo receiving unit 40 comprising a photo receiving element such as phototransistor or photodiode for conducting optical-electrical conversing and signal amplification if necessary and a digital interface I/F (input means) 41 for inputting digital audio data by converting a signal which is received via the photo receiving element into binary values and sampling them are newly introduced. The jack 20 is a connector which is capable of externally transmitting analog audio signals such as conversation voice and is disposed in a given relationship with the photo receiving element.

Specifically, the plug 10 comprises three contacts 11, 12 and 13 which are electrically insulating to each other as shown in Fig. 1(b). The jack 20 comprises three contacts 21, 22 and 23 which are electrically connected to three contacts 11, 12 and 13, respectively of the plug 10 when the plug 10 is inserted thereto so that the signals such as right and left sound signals and ground GND signals can be passed therethrough.

An optical fiber 14 is embedded in the core of the plug 10. Correspondingly thereto, a photo receiving element of a photo receiving unit 40 is incorporated on the bottom of the plug insertion hole in the jack 20, so that external light which has been transmitted through the optical fiber 14 is emitted toward the photo receiving element of the photo receiving unit for the tip end of the optical fiber 14 and is received by the photo receiving unit 40.

The received light signal is converted into an electrical signal by the photo receiving unit 40 and is objected to wave-shaping for conversion into a digital signal and is sampled in proper timing by the digital I/F and is fed into the DSP 43 in which it is subjected to program processing. Briefly, the photo receiving unit 40 and the digital I/F 41 convert a light signal which has passed through the jack 20 from the plug 10 into a digital audio data which dan be processed by the DSP 34.

The DSP 34 also serves as means for writing the digital audio data into the memory 37 as the melody data. At this end, the DSP 34 conducts following additional data processing in addition to the above-mentioned each processing. If the input digital audio data is from a PCM sound source so that it is in such a format that it can be played back by the scale generating circuit 35 without any processing, unprocessed digital audio data is then forwarded to a relevant area of the memory 37 for overwriting thereon. In contrast to this, if the input digital audio data is from a different sound source so that it is not in a format which is suitable for playback in the scale generating circuit 35, the digital audio data is then converted into a desired format as far as it is possible and it is written into relevant area of the memory 37.

Then, processing to extract predetermined data from the input digital audio data is conducted if necessary in addition to such conversion of the data format. For example, if the digital audio data includes data of a main code area which deals with music information such as song and data of subsidiary code area containing non-musical information such as medium titles or KARAOKE information, data of the main code area is then mainly used, or alternatively, the data of the main code area is discarded so that only data of the subsidiary code area is adopted as melody data.

An optimal processing is automatically selected from these processings, and is executed in accordance with program processing when an approach can be determined from the header information in the digital audio data based upon a number of preliminarily assumed standards. When otherwise, an appropriate processing is conducted in accordance with relevant program processing if a proper mode of operation is specified by actuation of the keyboard 32. A program which enables such function has been installed in the DSP 34.

Manner of use and operation of the portable telephone 30 of the first embodiment will be described with reference to the drawings. Fig. 2 (a) and 2 (b) are external views showing different use situations.

When the external microphone 2 or earphone 3 is used in lieu of inner built-in microphone or speaker 36 during telephone conversation, the plug 1 at the tip end of the cable extending from the microphone 2 or earphone 3 is inserted into the jack 20 of the portable telephone. The plug 1 may be the same as the plug 10. The plug 10 from which the optical fiber 14 is omitted or an assemblies of the plug 10 with the contacts 11, 1re commonly used. If the microphone 2 is connected to the cable, the sound which is picked up by the microphone 2 is transmitted from the jack 1 to jack 20 and then the switch circuit 30 in the form of analog audio signal and is sequentially passed through the speech input circuit (not shown), DSP 34, communication circuit 38 and antenna 31 while being modified and then transmitted through a wireless telephone line.

If the earphone 3 is connected to the cable, the audio signal which is wirelessly transmitted and is received by the antenna 31, and the communication circuit 38 is passed through the DSP 34 and the speech output circuit (not shown) and is converted into the analog audio signal. The analog audio signal is then transmitted through the switching circuit 39, jack 20, and plug 1 to the earphone so that it is converted into audible sound.

In such a manner, transmission of the analog audio signal between an external sound source and the telephone is conducted through the contacts 21, 22 and 23 of the connector 20.

The melody of the incoming call alert sound can be changed by manual actuation of the keyboard 32 for entry of all melody data or by automatic entry of melody data from a CD player 4 if any (refer to Fig. 2(b)). The CD player should have a function for externally outputting the digital audio data in the form of optical signal which has been read from the main or subsidiary code area of the recording medium as well as essential functions of headphone outputting. Since most of CD players have such a function, if a cable having plugs 10 at its opposite ends can be prepared in most cases, mutual connection between the CD player and the portable telephone 30 can be conducted.

After the portable telephone 30 is connected to the player 4, the mode of operation of the portable telephone 30 is preset to a mode of automatic entry of the melody data by actuating the keyboard 32 of the portable telephone 30. Then, playback operation is commenced by actuating a switch of the player 4. By doing so, the digital audio data which is read from the recording medium by the player 4 is transmitted in the form of digital optical signal from the optical fiber 14 of the plug 10 to the light receiving unit 40 at the rear end of the jack 20 and is passed through the digital I/F 41, DSP 34 and memory 37 while being changed and then written into the relevant area of the melody data of the memory 37.

In such a manner, entry of external digital audio data is conducted through the light receiving unit 40 which is provided for the connector 20.

A favorite melody is preferably written in the portable telephone 30 by selecting among titles by actuating the keyboard 32 or selecting the intermediate part of one title while listening the played back sound from the player 4.

If common music CD is used, general digital audio data at the main code area is read and conversion of the data format is conducted as well as the extraction of the main melody in contrast to this, if a devoted CD in which melody data is preliminarily recorded at the subsidiary code area is used, only relevant digital audio data is selected from the data at the subsidiary area for downloading the melody data. Accordingly, failure of melody extraction can be positively avoided.

Changing of the melody data of the portable telephone can be conducted only by connecting the player 4 to the portable telephone 30 similarly to the microphone 2 and the earphone 3 and by slightly actuating the keys.

### (Second Embodiment)

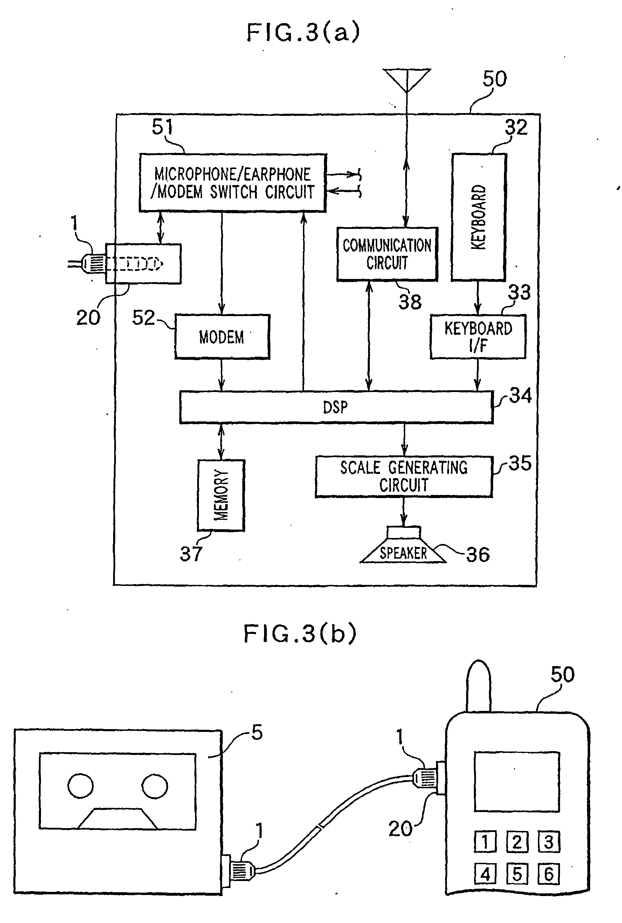

The detailed structure of a second embodiment of the portable telephone of the present invention will now be described with reference to the drawings. The second embodiment which is shown in Figs. 3 in which the above-mentioned third and fourth solving means are embodied. Fig. 3(a) is a block diagram showing the whole of the circuit, corresponding to the above-mentioned Fig. 1(a). Fig. 3(b) is an external view also showing the use situation corresponding to the above-mentioned Fig. 2(b).

The portable telephone 50 is different from the above-mentioned portable telephone 30 in that a modem 52 (modulating -demodulating circuit) is introduced in lieu of the photo receiving unit 40 and the digital I/F 41 and in that the switching circuit 39 is modified into a switching circuit 51 in association therewith.

Although illustration is omitted, part of the content of the program processing is also modified in association therewith. The switching circuit 51 is adapted to pass the signals from the contacts 21, 22 and 23 of the jack 20 to a voice input circuit corresponding to the microphone 2, a voice output circuit corresponding to the earphone 3 and newly added modem 52.

The modem 52 is connected in such a manner that data transmission to the jack 20 via the switching circuit 51 can be conducted and is also connected to the DSP 34 through an appropriate interface and the like. The modem 52 includes a modulating circuit and a demodulating circuit relying on comparatively convenient FSK frequency shift keying) or ASK (amplitude shift keying) scheme in order to perform digital modulation and demodulation of the melody data. The modulation and demodulation is conducted in the appropriate audible frequency range of several hundreds to several thousands Hrz so that the modulated signal can be recorded by a common recorder as an analog audio signal.

The DSP 34 has a program which is changed to also perform the processing to access to the memory 37 for providing its melody data to the processing in the modem 52. Specifically, the DSP 34 is adapted to read the melody data from the memory 37 to consecutively deliver it to the modem 52 in a mode of melody data recovery operation and to overwrite the data which is taken from the modem 52 on the melody data area of the memory 37.

Manner of use and operation of the portable telephone 50 of the second embodiment will be described. Since the manner of use and operation concerning with ordinary telephone conversation and conversation using the microphone 2 and earphone is identical with that in the foregoing first embodiment, saving and recovery of the melody data using the recorder 5 will now be described.

A cassette tape recorder and the like which is capable of recording as well as playing back is used as the recorder 5. Even if such an audio device is a common device, it is often provided with jacks for inputting/outputting analog audio signals. Accordingly, in most cases, if a cable having plugs 1 at its both ends can be provided, this cable makes it possible to connect the portable telephone 50 with the recorder 5 (refer to Fig. 2(b)).

Then, the recorder 5 is operated in a mode of recording operation and the portable telephone 50 is brought into a mode of saving by slightly actuating the keyboard 32 of the portable telephone 50. By doing so in the portable telephone 50, the melody data is read from the memory 37 to the DSP 34 and is FSK modulated or otherwise by the modem 52 so that it is converted into an analog audio signal and then fed to the switching circuit 51 and the jack 20. The audio signal is fed therefrom via the plug 1 and cable to the recorder 5. In the recorder 5, the melody data is treated like beeper sound and is recorded on the recording medium such as cassette tape and the like. In such a manner, the melody data of the portable telephone 50 is saved in an external recording and playing back device which is connected to the telephone through the connector 20.

If it is desired that the saved melody data be immediately or subsequently input to telephone, after the recorder 5 is connected to the portable telephone 50 and the portable telephone 50 is brought into a mode of melody data recovery operation by merely actuating the keyboard 32 of the portable telephone 50, the recorder 5 is operated in a mode of playing back. Beeper sound of the analog audio signal which is played back by the recorder 5 is fed to the portable telephone 50 through the cable and the plug 1 and is transmitted to the modem 52 via the jack 20 and the switching circuit 51, in which it is recovered to the original digital data by the demodulation processing. The recovered data is written on the melody data area of the memory 32 by means of DSP 34.

Since the melody data which was once entered into the portable telephone 50 can be stored in a recording medium by using a common audio recording and playing back device, it may be easily recovered when it is desired to use it again even after the melody data is deleted from the portable telephone 50. Accordingly, the necessity to reentry of all melody data by actuating the keyboard 32 can be eliminated and saving and recovery of the melody data can be conducted without actuating the keyboard even when the CD or other recording medium is returned to rental shop or other persons after the melody data is input from the player 4.

### (Third Embodiment)

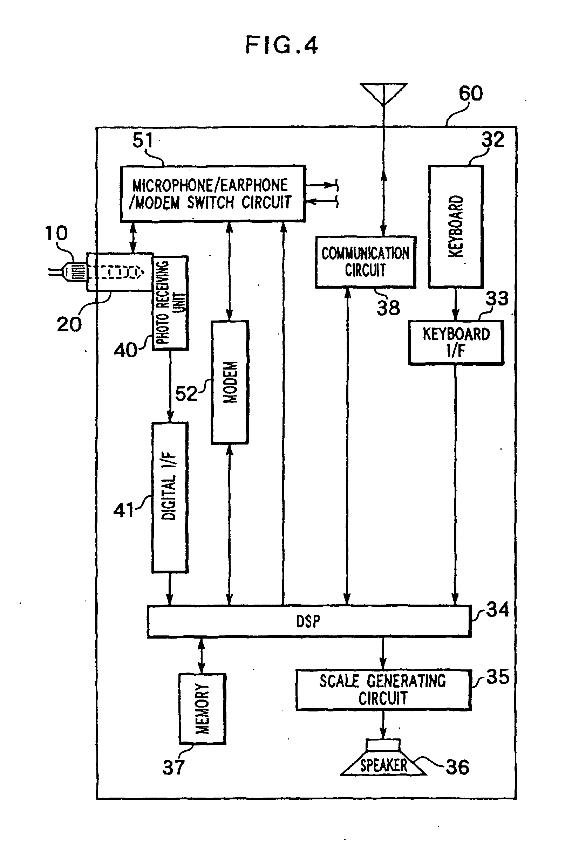

Detailed structure of the portable telephone of the present invention will now be described with reference to the drawings. The third embodiment shown in Fig. 4 is an embodiment of the above-mentioned first to fourth solving means. Fig. 4 is a block diagram showing the whole of the circuit, corresponding to the above-mentioned Fig. 2(a) and 3(a).

The portable telephone 60 includes both the photo receiving unit 40 and the digital interface I/F 41 in the portable telephone 30; and the modem 52 and the switching circuit 51 in the portable telephone 50. The DSP 34 is adapted to also support the operation modes and data processing in both telephones.

In this case, automatic entry of the melody data by connecting the player 4 to the telephone as well as the saving and recovery of the melody data by connecting the recorder 5 to the telephone can be easily conducted by slight and supplemental key actuation.

### (Additional Features)

Although the photo receiving unit of the photo receiving unit 40 is integrated into the jack 20 in the foregoing embodiments, the manner of providing of the photo receiving element with respect to the connector is not limited thereto. The photo receiving element may be otherwise provided if it is capable of receiving light. For example, it may be detachably mounted by threading or forced fitting, or removably fastened by appropriate fastener or fitting, or may be disposed to provide a space by using an appropriate positioning member or embossed member.

The keyboard 32 is not limited to the push keys, but may be rotary thumb wheel or tiltable stick if it is actuatable.

The DSP 34 may be a multi-purpose processor, wired-logic and a combination thereof if it may be a signal processing circuit having enough processing capability.

The memory 37 is not limited to non-volatile memory such as flash memory, but it may be RAM and the like which is backed up by a battery.

The player 4 is not limited to the CD player, but may be other devices if it is capable eternally outputting melody data in form of digital optical signal. It may be, for example, a player for MD (mini disk), DAT (digital audio tape), DVD (digital video disk).

The recorder 5 is not limited to the cassette tape recorder, but may be other device if it is capable of receiving and transmitting digital modulated melody data from and to an external device, such as reader/writer of the magnetic card, or recording/playing back device such as VCR (video cassette recorder).

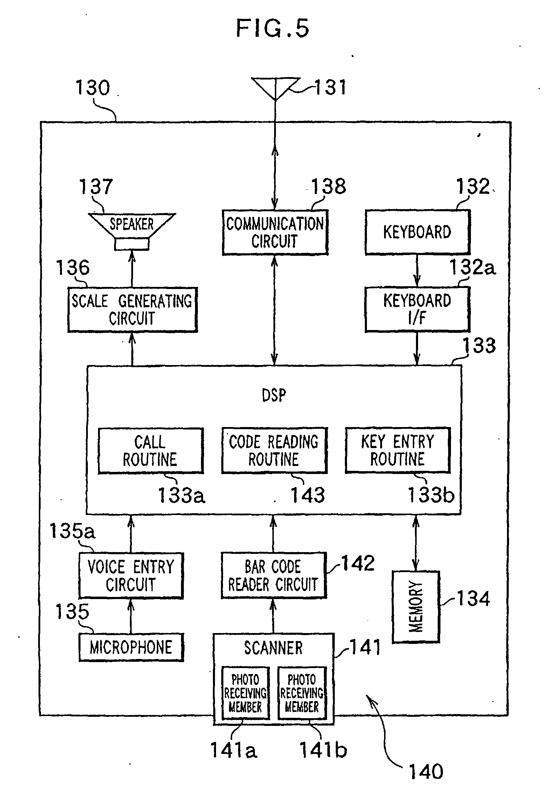

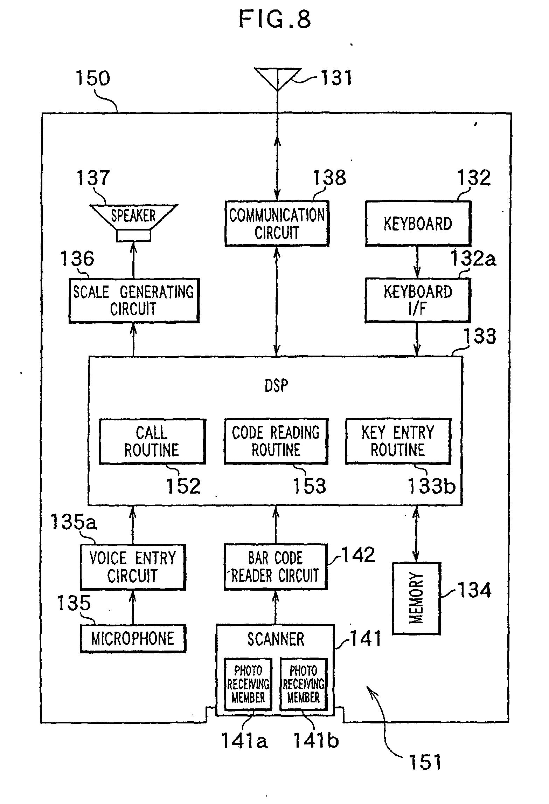

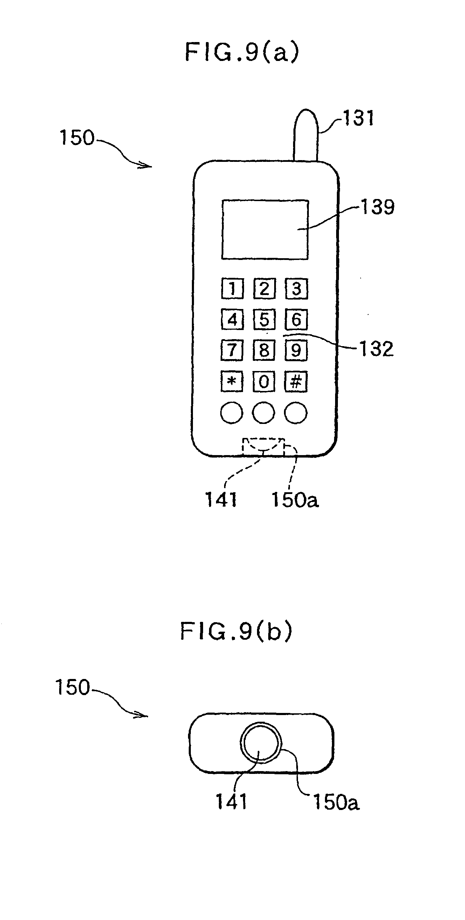

A fourth embodiment shown in Fig. 5 to 7 is an embodiment of the above-mentioned fifth and sixth solving means. A fifth embodiment shown in Fig. 8 and 9 is an embodiment of the above-mentioned seventh and eighth solving means. Through the drawings, identical or similar constitutional elements are designated with identical numerals.

### (Fourth Embodiment)

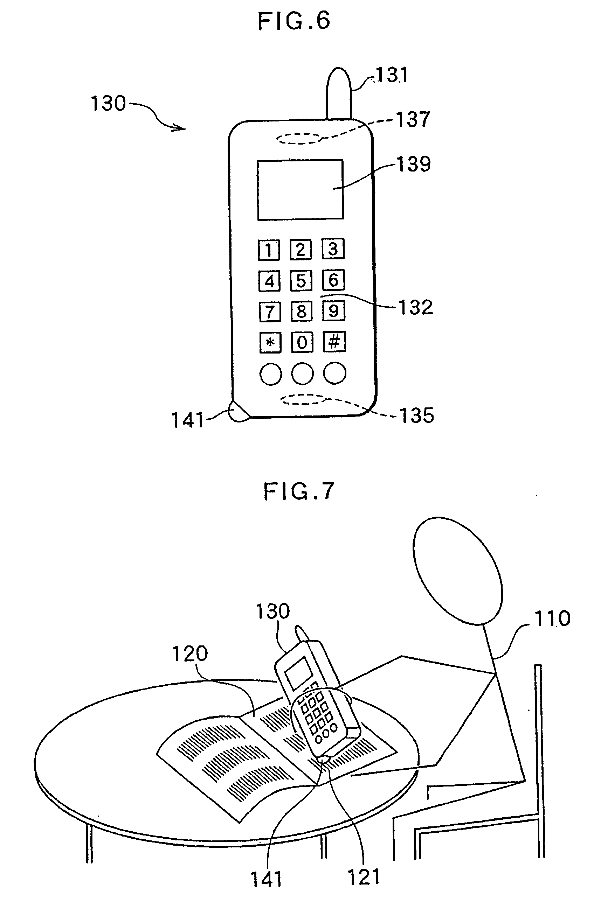

Detailed structure of the fourth embodiment of the portable telephone of the present invention will now be described with reference to drawings. Fig. 5 is a block diagram showing the inner structure of the portable telephone and Fig. 6 is a front view showing its appearance.

The portable telephone 130 is provided with an antenna 131 for radio communication and a communication circuit 138 for conducting transmission and reception to and from a base station via the antenna (refer to Fig. 5 and 6). The telephone further includes a keyboard 132 on which push buttons are disposed as actuating members for entry of telephone numbers and the like and a keyboard interface 132a. The telephone is provided with a microphone 135 and a speech circuit 135a inputting voice which the operator speaks and is further provided with a speaker 137 for converting the received signal into audible sound.

The housing of the portable telephone 130 is made of a metal or thermoplastic resin and is often in the form of an oblong parallelepiped or box-shape having rounded corners so that it is handy (refer to Fig. 6). It may be in the form of plural linked boxes which can be folded. Extension members such as the above-mentioned antenna 131 keyboard 132 and LCD panel 139 for displaying characters and images are mounted on the housing in such a manner that they are partially exposed.

In order to support the telephone conversation, a digital signal processor 133 is incorporated in the portable telephone 130 (refer to Fig. 5), which appropriately controls and dries the above-mentioned means for executing various processing such as necessary communication procedure or call. A calling routine 133a which performs processing associated with call and a key entry routine to support an entry by actuating the keys of the keyboard 132 are installed in the digital signal processor 133. A memory 134 comprising a flash memory and the like which is accessive for read/write by the digital signal processor 133 for saving many telephone numbers such as bearer's telephone number and automatically dialed numbers is also incorporated in the portable telephone 130. Operating power is supplied to the digital signal processor and the memory from a batter (not shown) in the housing.

The memory 134 also serves as means for storing incoming call alert sound data such as melody data. At this end, necessary part of the memory is reserved. The melody data may be written into relevant area of the memory 134 as digital data which has been pulse code modulated or otherwise. It may be written by means of devoted jig before being shipped from the factory, or may be rewritten by a user. Specifically, the data at the relevant area of the memory 134 is rewritten in accordance with program of the key entry routine 133b of the digital signal processor 133 if presetting of a given mode and entry of consecutive data is performed by actuating the keyboard 32.

In addition to a synthesizer circuit; a scale generating circuit 136 including a conversion processing circuit which converts digital data into an analog audio signal by performing decoding or demodulation corresponding to the pulse code modulation is incorporated in the portable telephone 130 for generating the melody sound on reception of an incoming call. The DSP 133 is adapted to read the melody data from the memory 37 after confirmation of the incoming call in accordance with its program processing and is also adapted to sequentially deliver the melody data to the scale generating circuit 136. The output from the scale generating circuit 136 is fed to the speaker 137. The scale generating circuit 136 and DSP 133 constitute means for playing back melodies based upon the melody data stored in the memory 134.

The portable telephone 130 (refer to Fig. 5) is also provided with melody data reading means 140 which enables reading of bar codes. The bar code reading means 140 comprises a scanner 141 (reading member) which scans the bar codes for reading them; a bar code reading circuit 142 which enters the data through the scanner 141 and a bar code reading program routine 143 which is installed in the digital signal processor 133 for reading the entered data into the memory 134 as melody data. They are accommodated in the housing of the portable telephone excepting part of the scanner 141.

In order to read bar code based upon the changes in the reflection on paper, the scanner 141 (refer to Fig. 5) comprises a light emitting elements 141a such as light emitting diodes and photo receiving elements 141b such as phototransistors or photodiodes. The transparent cover of the scanner 141 is mounted on the housing at one of the corners so that it slightly protrudes therefrom. The scanner is firmly secured to the housing by screwing or fitting so that it is not movable even if it is pressed with a finger. Such a scanner 141 is a reading member which is directly secured on the housing of the portable telephone and is additionally provided with exposed transparent cover and a fixing fastener member. There is no devoted housing member which encloses the whole of the scanner. The scanner is enclosed by the housing of the portable telephone 130.

The bar code reading circuit 142 includes a circuit which binarizes the photoelectrically converted signal for recognizing the pattern of the bar code and a circuit for qualifying the reading condition for entry of the data through the scanner 141 as well as the light emitting elements 141a and photo receiving elements 141b. The reading circuit 142 converts the read data into binary data and sends it to the digital signal processor 133. The bar code reading circuit 142 has no devoted housing member. The bar code reading circuit 142 is mounted on the circuit board together with the digital signal processor 133 and the voice input circuit 135a or is made of an IC similarly to them and is accommodated in the housing of the portable telephone 130.

When the portable telephone 130 is brought into the melody data reading mode by actuation of the keys, the bar code reading routine 143 is started for controlling the bar code reading circuit 142. The bar code reading circuit 142 and the scanner 141 are controlled so that it will not become active during that mode of operation for saving power of the battery. The bar code reading routine 143 waits for the data being sent from the bar code reading circuit 142 during that mode of operation. When the data comes, the routine accepts it and writes the input data into the relevant area of the memory as melody data. The digital signal processor 133 is programmed so that such processing is performed by the execution of the bar code reading routine 143.

Use and operation of the portable telephone of a fourth embodiment will be described with reference to the drawings. Fig. 7 is a schematic view showing the manner of its use.

The manner of use and operation of the portable telephone on a call is identical with that of the prior art. For example, since dialing is conducted by the actuation of the keyboard 132, speech signal is received by the microphone 135 and is generated by the speaker 137 and wireless communication is conducted by the call routing 133a and the communication circuit 138, the detailed description of them will be omitted. Changing of the melodies of the incoming call alert sound will be mainly described. Changing of the melodies of the incoming call alert sound can be conducted by entering all the melody data by the actuation of the keyboard 132 similarly to the prior art as well as by scanning the bar codes 121 representing the melody data which are printed on a brochure 120 if any (refer to Fig. 7).

Since contents such as the title and the classification of the melody in Japanese as well as bar codes 121 are printed on such a brochure 120, a user 110 firstly reads it and selects the desired melody and opens the relevant page of the brochure 120.

Together with this, the portable telephone 130 is preset to a mode of melody data reading operation by slightly actuating the keys on the keyboard 132 of the portable telephone 130.

This will initiate the bar code reading routine 143 in the portable telephone 130, so that the bar code reading circuit 142 and the scanner 141 are activated and light is emitted from the light emitting element 141a. In such a manner, the portable telephone is ready to read the bar codes 121.

When the preparation is completed, the user 110 will move the portable telephone 130 which he or she holds upon the brochure 120 to position the scanner 141 immediately before the starting point of the bar codes 121 to be read. Then the portable telephone 130 is moved along the bar code 121 so that the scanner 141 scans the bar codes 121 while the scanner 141 is in contact with the paper or is slightly separated therefrom. In such a manner, manual scanning of the bar code 121 is conducted.

When the bar code 121 is scanned, the bar code data which is read from the bar codes by the scanner 141 is fed to the digital signal processor 133 via the bar code reading circuit 142 in the portable telephone 130 and is written in the relevant area of the melody data in the memory 134 by the processing of the bar code reading routine 143.

Then, the bar code reading routine 143 terminates the reading operation immediately after the writing of data or in response to a predetermined actuation of the keys of the keyboard 132 corresponding to the mode release, so that the mode of operation of the portable telephone 130 will return to usual state.

Thus, only slight key actuation and reading work of the bar codes enables the melody data of the portable telephone 130 to be easily changed.

### (Fifth Embodiment)

Detailed structure of the fifth embodiment of the portable telephone of the present invention will now be described with reference to drawings. Fig. 8 is a block diagram corresponding to the above-mentioned Fig. 5, showing the inner structure of the portable telephone. Fig. 9(a) is a front view corresponding to Fig. 6, showing the appearance of the portable telephone and Fig. 9(b) is a bottom view showing the appearance of the portable telephone.

The portable telephone 150 is substantially identical with the above-mentioned portable telephone 130 except that the melody data reading means 140 is replaced with melody data reading means 151 having extended functions and that the calling routine 133a is replaced with the calling routine 152. In the melody data reading means 151, a bar code reading routine 153 has enhanced functions and the manner of incorporation of the scanner 141 is modified.

The bar code reading routine 153 is not only adapted to write into a memory 134 the melody data which is fed from the bar code reading circuit 142 is, but also adapted to deliver the melody data to the scale generating circuit 136 for playing back the melody. The scanner 141 is incorporated on the bottom of the recess 150a which is formed on the bottom of the portable telephone 150 so that it will not protrude therefrom although the light emitting and receiving unit or its transparent cover is externally exposed.

In order to detect an incoming call during the acceptance of the melody data, the call routine 152 continues to monitor the receiving state of the communication circuit 138 without terminating the operation when the portable telephone 150 is at the normal call mode as well as the melody data reading mode and irrespective of whether the bar code reading routine 153 is active or not. When the calling routine 152 detects an incoming call when the telephone is in the melody data reading mode, it immediately terminates the operation of the reading routine to cause the telephone to release from the reading mode.

The call routine 152 also conducts processing to read the melody data stored in the memory 134 to deliver it to the scale generating circuit 136 for generating an incoming call alert sound for responding a call from the telephone line with higher priority than the accepting of the melody data. This enables the portable telephone 150 to play back the melody data in response to the detection of an incoming call during accepting the melody data.

The call routine 152 is also capable of processing the reproducing melody data in an unusual manner. For example, the melody data transfer from the memory 134 to the scale generating circuit 136 is conducted at several divided intervals and a beep sound is generated before the starting of transferring, each interval of transferring and after the completion of transferring. Alternatively, the memory 134 has an enough capacity and stores data in which voice guidance "real call", etc. is coded. This voice guidance is transferred alternatingly with the melody data. The program of the calling routine 152 is extended to enable such operation.

Use and operation of the fifth portable telephone will now be described.

The way of using the portable telephone is substantially identical with that of the foregoing first embodiment. The scanner 141 can be directed toward the bar code 121 without tilting the portable telephone 150 since the scanner 141 is provided in the central position of the bottom of the housing of the portable telephone 150. Even if the portable telephone 150 is moved along a paper while it is in contact therewith, the scanner 141 which is adapted in the recess 150a will never become dirty. The melody data is played back by the bar code reading routine 153 so that the melody is generated via the scale generating circuit 136 and the speaker 137 each time when the bar code 121 is read and the melody data in the memory 134 is rewritten. The user 110 can listen to the melody which has been input as an incoming call alert sound to confirm it immediately. Accordingly, most favorite melody can be easily and quickly selected and its melody data can be written by repeating the acceptance and confirmation of the melody data which is read from the various bar codes.

If an incoming call via the telephone line is received while such acceptance of the melody data is conducted, it is informed to the digital signal processor 133 via the antenna 131 and the communication circuit 138. In response to this, the calling routine 152 will terminate the operation of the bar code reading routine 153 and the melody data which is stored in the relevant storage area of the memory 134 is fed to the scale generating circuit 136. At this time, an identification data such as beep sound is accompanied to the appropriate positions of the melody data and they are fed to the scale generating circuit 136.

Since an incoming call alert sound having a melody which is apparently different from the melody data which is input by the bar code reading, the user 110 can positively notice there is an actual incoming call.

### (Other features)

It has been described that the scanner 141 is incorporated at the corner of the housing or in the central position of the bottom thereof in the foregoing embodiments. It is merely exemplary. The scanner 141 may be provided in any positions on the housing unless it interferes with the antenna 131 and the other exterior members such as connectors (not shown). An appropriate removable cover may be directly mounted at the end of the scanner 141 or be fitted on the recess 150a, etc. so that the exposed face of the scanner 141 will not become dirty.

Although the scanner 141 is exemplarily illustrated as simple manual type, it is not limited to this type. It may be of automatic scanning type. For example, scanning may be conducted by moving the light point by changing the light directing angle.

The scanner 141 on the housing may be directly mounted on the housing or on a circuit board or the other bracing members, etc. which are firmly secured to the housing.

The printed matter is not only the above-mentioned brochure 120, but also published matters such as books, magazines, pamphlets, cards on which the lyrics of a song is printed and the other matters on which bar codes can be printed.

The keyboard 132 is not limited to the push key and may be rotatable wheels tiltable stick if it may be actuatable. The digital signal processor 133 may be a versatile processor, a wired logic or a combination thereof if it has an enough processing capacity. The memory 134 is not limited to a non-volatile memory such as flash-memory, may be a RAM, etc. which is backed up with batteries.

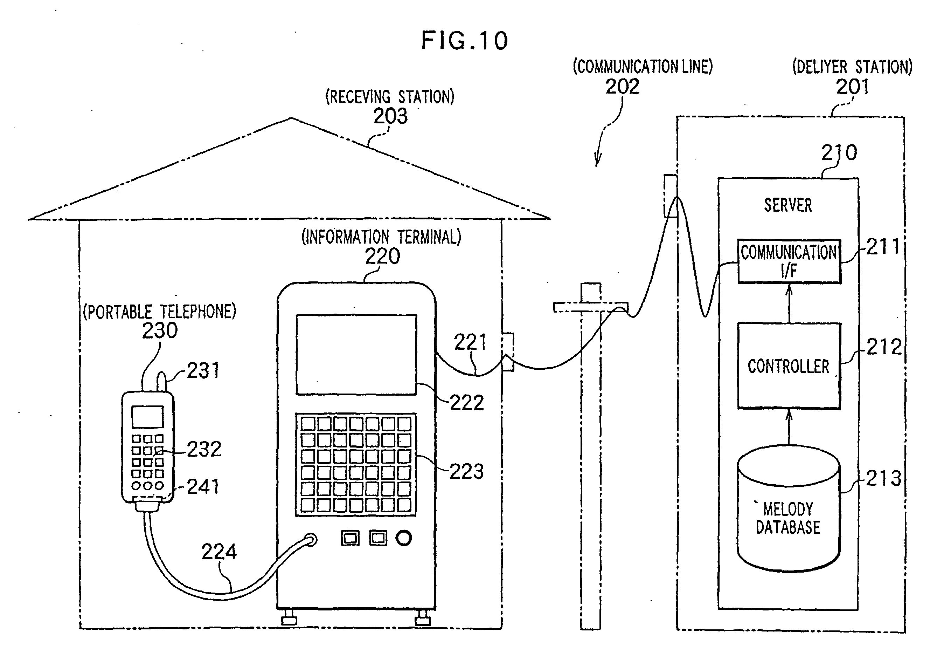

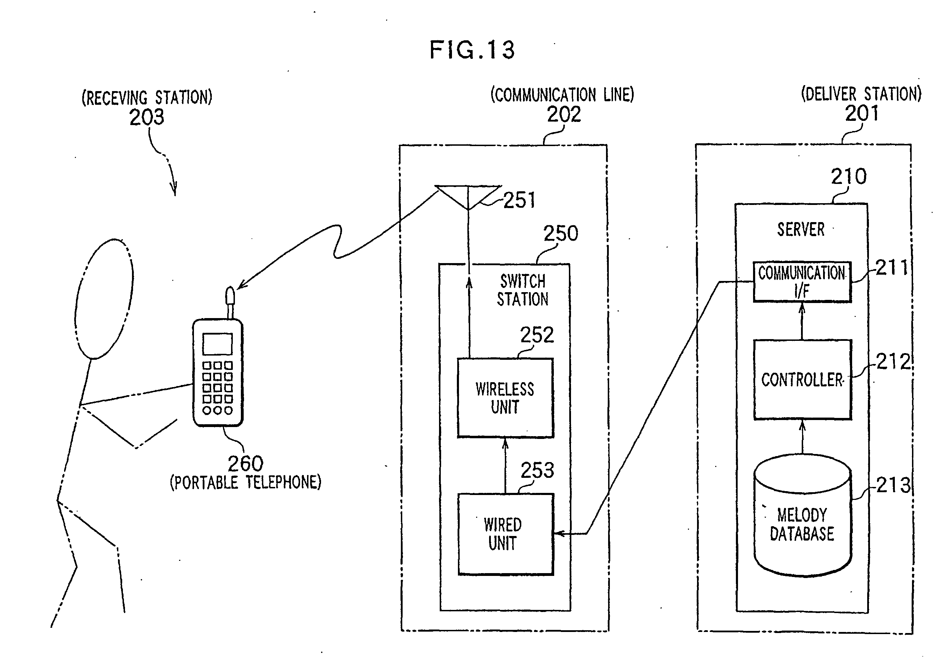

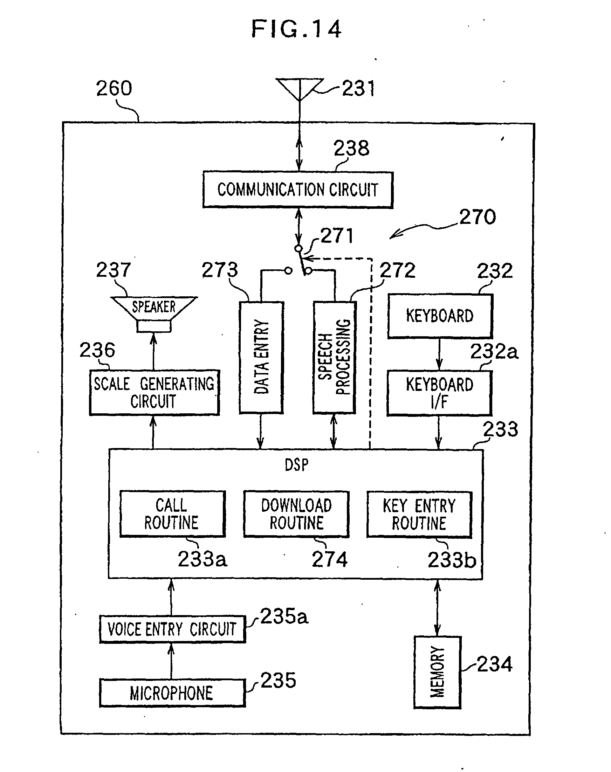

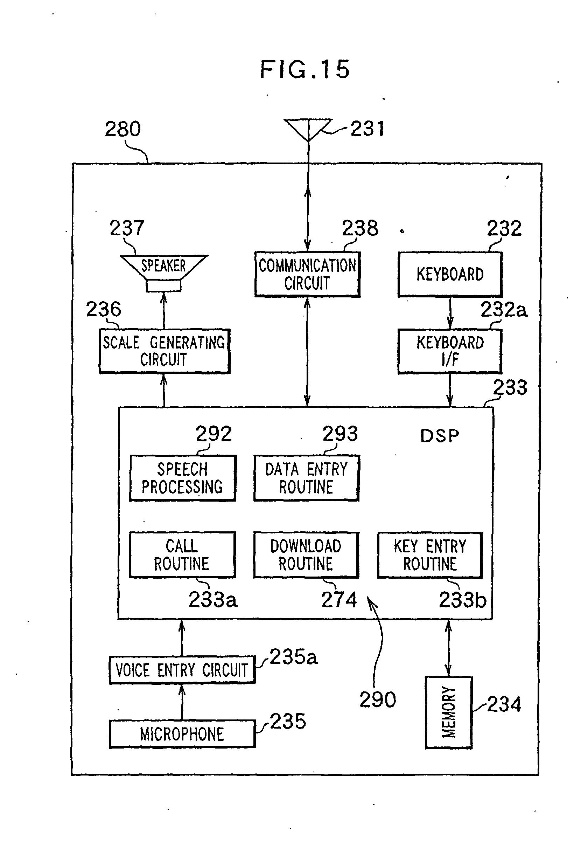

Sixth embodiment which is shown in Fig. 10 to 12 is an embodiment of the above-mentioned ninth solving means. The embodiment shown in Fig. 13 and 14 and the modification shown in Fig. 15 is an embodiment of the above-mentioned second solving means. Like or similar components are designated by like numerals through various drawings.

### (Sixth Embodiment)

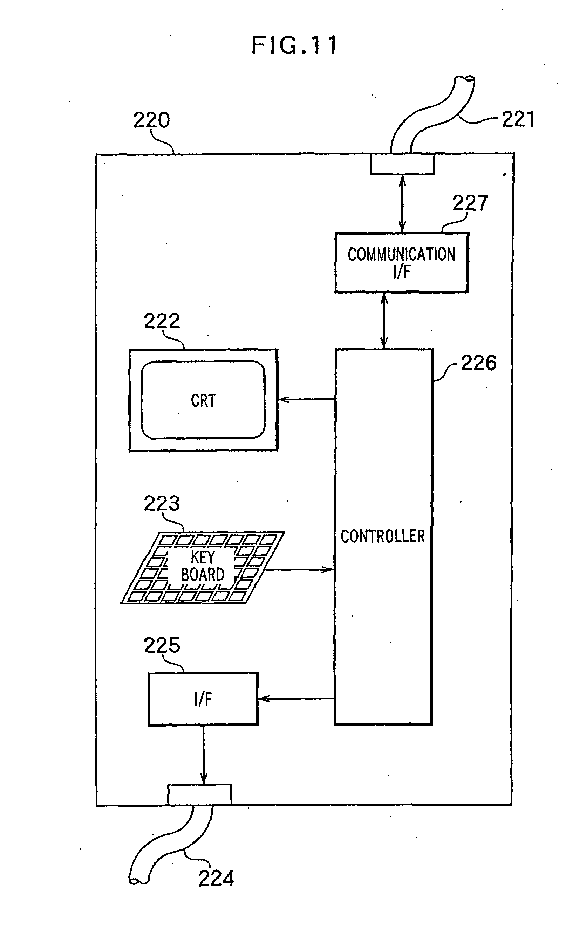

Detailed structure of the melody data entry system for portable telephone of the present invention will now be described with reference to drawings. Fig. 10 is a schematic structural view showing the whole of the system. Fig. 11 is a block diagram showing the information terminal of the system. Fig. 7 is a block diagram of the portable telephone.

In order to deliver the melody data via a communication line, this melody data input system for the portable telephone comprises a sending delivery station 201, receiving station 203, a communication line 202 between the both stations (refer to Fig. 10). The communication line 202 may be commonly used public line or devoted line, and may be wire line or wireless line, and may be electrically or optically communicatable, or may be a communication path which may be dynamically changeable like Internet. A server 210 is provided in the sending delivery station 201 and an information terminal 220 which can be connected to the portable telephone 230 is provided in the receiving station.

The server 210 (refer to Fig. 10) comprises a communication interface 211 which is compatible with the communication line 202, a controller 212 including a computer system and the like in which application programs such as data retrieving program and delivery managing program are installed, and a melody database 213 including high capacity storage such as hard disks and tape devices in which a lot of melody data are stored. When an instruction to the controller 212 is made by an operator, or a new melody data is added to the melody data base 213, voluntary collective data delivery of the melody data to a number of registered information terminals 220 by sequentially calling them via the communication line 202 or by broadcasting under control of the controller 212.

When a given melody data is requested from any of the information terminals 220 via the communication line 202, passive individual delivery is conducted by the server 210 searching the requested melody data from the melody database 213 for transmitting it to only the information terminal 220. In order to smoothly conduct such delivery , melody data in the same digital format as that in the portable telephone 230 is stored in the melody database 213 and attribute data such as uniquely assigned index numbers, title and classification data are also stored therewith. Such a server 210 is connected to the communication line 202 for delivering the melody data to one or more information terminals 220 over the communication line 202.

In the information terminal 220 (refer to Fig. 10), its housing is designed to have the height based upon the height of average person so that the information terminal is easy for any user to use. The housing is provided on its outer face with a communication cable 221 leading externally from the rear face or side of the housing to the communication line 202, a display 222 comprising a CRT (cathode ray tube) for displaying title list and attributes of the melody data, a keyboard 223 on which versatile and devoted keys are disposed and which is mounted in such a position that it is easy for the user to operate while watching screen of the display 222 and a removable cable 224 externally extending from the front and lateral side of the housing.

The housing of the information terminal 220 (refer to Fig. 11) accommodates therein a controller 226 comprising a microprocessor system for processing for the display 222, a digital interface 225 interposed between the removable cable 224 and the controller 226 and a communication interface 227 interposed between the communication line 221 and the controller 226.

The communication interface 227 includes a transmitting and receiving circuits which are compatible with the communication line 202 and can be rendered to a mode of operation in which it can be always communicated with the communication interface 211 of the server 210 or a mode of operation in which it can be communicated therewith whenever it is called or is calling for the necessity of communication, depending upon the characteristics of the communication line 202. In both cases, if delivery of the data from the controller 226 to the server 210 is requested, the data is delivered to the communication like 202. If collective or individual delivery from the server 210 to the information terminal 220 is made, the interface 227 receives it and delivers it to the controller 226. At this time, the interface also receives associated data such as title together with the melody data and delivers it. This causes the information terminal 220 to fixedly or dynamically connect to the communication line 202 so that it passively or actively receives the melody data from the delivery device 210.

The controller 226 has secondary storage devices such as non-volatile memory or hard disk (not shown) for holding the delivered melody data. In order to suppress the frequency of the request of the melody data to the server 210 by increasing the utilization of the local data, all the data including the melody data, the period of time since the deliver has not lapsed for a given period of time and the frequently used melody data as well as the associated data are held while the other data is deleted leaving only the minimum data which is necessary for retrieving their index number or titles. In such a manner, the controller is programmed so that the melody data which is as much as the capacity of the secondary storage device allows is stored therein.

The removable cable 224 is made of a flexible multi-core cable and is provided at the front end thereof with an insertable connector member which is compatible with the connector 241 of the above-mentioned portable telephone 230. The digital interface 225 is an input/output circuit which is operated under control of the controller 226. The interface may be any type if it is compatible with an external interface 242 of the digital portable telephone 230, for example, 8-bit parallel data I/O (input/output) or UART (Universal Asynchronous Receiver Transmitter) . When the above-mentioned connector at the front end of the removable cable 224 is coupled with the connector 241, data transmission between the controller 226 and the portable telephone 230 is made possible. Such a removable cable 224 is fixedly provided for the information terminal 220 and is removably provided for the portable telephone 230 and serves as dynamic connection which connects the information terminal 220 with the portable telephone 230 via the connector 241.

The keyboard 223 is provided with larger keys and buttons so that the user can easily actuate and is connected with the controller 226 so that signals and data which correspond the actuation are fed to the controller 226. Depending upon the depression of given keys on the keyboard 223 and the key entry of index numbers, the controller 226 changes the content which is displayed on the display 222 and reads and immediately delivers the melody data from the hard disk when the melody data is selected and writing of the melody data is decided if it is stored in the hard disk. If the main portion of the melody data is not stored, the controller 226 sends a request of individual delivery to the server 210 via the communication line 202 and delivers the melody data in interest to the portable telephone 230 via the digital interface 225 and the removable cable 224. Such a keyboard 223 is provided on the information terminal 220 and is an actuatable entry device by which an instruction for delivery of the melody data which was just received or has been received and kept can be entered into the dynamic connecting means 224.

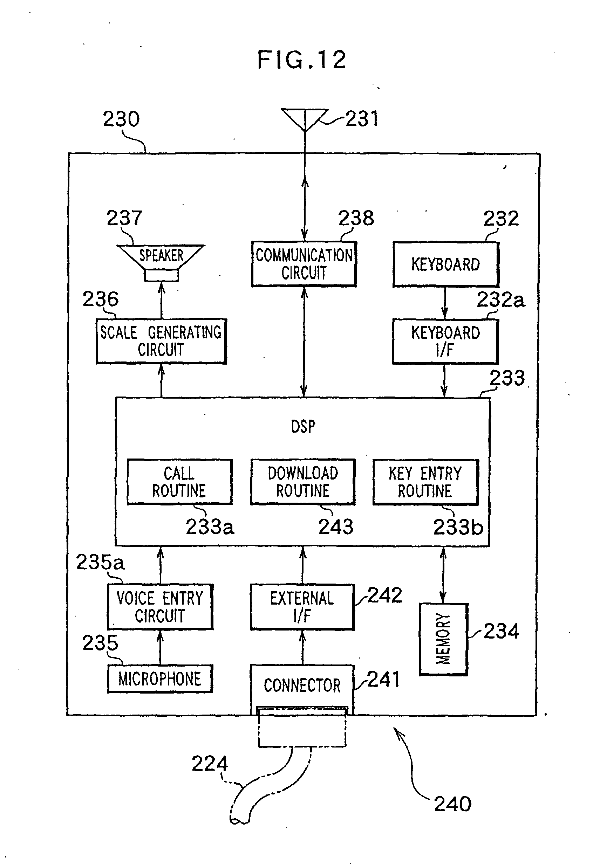

The portable telephone 230 (mobile telephone) is provided with an antenna 231 and a communication circuit 238 for performing transmission and reception to and from a base station via the antenna 231 and radio communicating means. The portable telephone 230 is also provided with a keyboard 232 on push buttons are disposed as actuating means for entering the telephone numbers and a keyboard interface 232a (refer to Fig. 10 and 12). The portable telephone is also provided with a microphone 235 and a voice input circuit 235a for entering voice which are generated by a talker and a speaker 237 for received signal into audible sound.

A digital signal processor 233, which executes necessary communication procedures and various processing such as calling by appropriately controlling and driving each means in order to support a call between both talking parties is incorporated in the portable telephone (refer to Fig. 12). A call routine 233a which performs processing which is associated with this call and a key entry routine 233b for supporting entry by actuating the keyboard 232 are installed in the digital signal processor 233. The portable telephone 230 has an incorporated memory 234 comprising a flash memory and the like for storing a number of directory numbers such as user's own telephone number or automatically dialed numbers in such a manner the memory is accessive form the digital signal processor 233 for reading and writing the telephone numbers. The memory 234 is supplied with operating power by batteries (not shown).

The memory 234 also serves as means for storing incoming call alert sound data such as melody data. At this end, necessary part of the memory is reserved. The melody data may be written into relevant area of the memory 234 as digital data which has been pulse code modulated or otherwise. It may be written by means of devoted jig before being shipped from the factory, or may be rewritten by a user such as purchaser. Specifically, the data at the relevant area of the memory 234 is rewritten in accordance with program processing of the key entry routine 233b of the digital processor 233 if presetting of a given mode and entry of consecutive data is performed by actuating the keyboard 232.

In addition to a synthesizer circuit; a scale generating circuit 236 including a conversion processing circuit which converts digital data into an analog audio signal by performing decoding or demodulation corresponding to the pulse code modulation is incorporated in the portable telephone 230 for generating the melody sound on reception of an incoming call. The DSP 233 is adapted to read the melody data from the memory 234 after confirmation of the incoming call in accordance with its program processing and is also adapted to sequentially deliver the melody data to the scale generating circuit 236. The output from the scale generating circuit 236 is fed to the speaker 237. The scale generating circuit 236 and DSP 233 constitute means for playing back melodies based upon the melody data stored in the memory 234.

The portable telephone 230 is provided at the bottom thereof with a female connector 241 having a lid as an externally connecting having connector. An external interface 242 between the connector 241 and the digital signal processor 233, through which melody data is entered from an external device is incorporated in the portable telephone 230. A download routine 243 is also installed in the digital signal processor 233. When the melody data is delivered from the information terminal in accordance with the program processing of the download routine 243 while the removable cable 224 is coupled to the connector 241, it is accepted and is overwritten on the relevant area of the memory 234. The melody data is stored in the memory 234 until it is replaced with the other melody data. Since the melody data is used as an incoming call alert sound by playing back means as mentioned above, the melody data can be entered into the portable telephone 230 via the externally connecting connector. The portable telephone is also capable of storing the melody data and playing back it as incoming call alert sound.

Manner of use and operation of the portable telephone of this embodiment will be described. Since usual call and change of the melody data by manual actuation is identical with that of the prior art, an automatic entry of the melody data using the information terminal 220 will now be described in detail.

Only one server 210 is required if it has an enough capacity. A plurality of servers may be provided to achieve an appropriate parallel connection and distribution in consideration with extension ability and flexibility of the system. In contrast to this, the information terminals 220 which are as many as possible are introduced for increasing the convenience for a lot of users and are distributed at receiving stations 203 which are convenience stores at local areas.

When the server 210 and the information terminal 220 are connected to the communication terminal 202, the delivery of the melody data from the server 210 to the information terminal 220 becomes possible.

When new melody data is added to the server 210 in this situation, this melody data is stored in the melody database 213 and is delivered to the information terminals at various areas. After repeating of such delivery, a great amount of melody data is accumulated in the melody database 213 and data which is necessary to select the melody data and the melody data having an amount which can be stored is also accumulated in the information terminals 220. A service to provide melody data through the information terminals 220 is enabled in such a manner.

When a user desires to rewrite melody data for his or her own portable telephone in this situation, he or she will go to the closest receiving station 203 and connects the removable cable 224 of the information terminal 220 to the connector 241 of the portable telephone 230. The download routine 243 is started in the digital signal processor 233 of the portable telephone 230 in response to the receiving of the connection information through the external interface 242 or the slight key actuation on the keyboard 233 for confirmation of the mode setting. A melody data selecting menu is displayed on the display 222 in the information terminal 220 in accordance with the program processing of the controller 226.

The user actuates keys on the keyboard 223 to increase or decrease the candidates of the melody data, or to listen to them while watching the menu and its operation guide which is displayed on the display 222, for ultimately selecting only one of them. Then, the user instructs to send its melody data by actuating a decision key on the keyboard 223 . If this melody data is kept in the information terminal 220, it will be immediately transmitted from the information terminal 220 to the portable telephone 230 via the removable cable 224.

If the melody data is not kept in the melody data, a guide "WAIT FOR A WHILE" is then displayed on the display 222 and a request of the individual delivery of the melody data is sent from the information terminal 220 to the server 210 over the communication line 202. The server 210 which has received this request retrieves the relevant melody data from the melody database 213. The searched melody data is delivered to the information terminal 220 via the communication line 202 and is stored in the controller 226 in the information terminal 220 and is also transmitted from he information terminal 220 to the portable telephone 230 via the removable cable 224.

When the melody data is sent to the portable telephone 230, the melody data is loaded to the portable telephone 230 in accordance with the processing of the download routine 243 and is written into the relevant area of the memory 234. Thereafter, a report of completion of an proper processing is returned to the information terminal 220 in accordance with the download routine 243 and the information terminal 220 is returned to the state of the initial menu. After the user looks at this menu to confirm the completion of downloading, he or she disconnect the removable cable 224 from the connector 241.

Using the information terminal 220 which is connected to the server 210 on a street corner via the communication line 202 enables the user to momentarily select various melody data from a great amount of melody data and to download them into the portable telephone 230 by simple actuation of the keys on the keyboard 223 even if the melody is sophisticated and the data is complicated, or long or the melody data is a brand new hit melody, which has not been published on a code brochure.

### (Seventh Embodiment)

Detailed structure of a seventh embodiment of the portable telephone of the present inventing will be described in detail with reference to the drawings. Fig. 13 is a schematic structural view showing the whole of the melody data entry system for portable telephone, which is capable of downloading the melody data to the portable telephones. Fig. 14 is a block diagram showing the portable telephone. Arrows in Fig. 13 show the flow of the melody data when it is downloaded, the direction of which is reversal to that when the individual delivery of data is requested.

Wireless telephone line is used as communication line in the melody data entry system for the portable telephone (refer to Fig. 13), so that only the portable telephone 260 is necessary for the receiving station 203 and the information terminal 220 can be omitted. In other words, the portable telephone 260 is connected in such a manner that it can be in communication with the server 210 serving as a delivery device disposed in the delivery station 201 via the wireless telephone line 202.

The server 210 (refer to Fig. 13) may be similar to that which has been described in the foregoing embodiments and may be simple server which conducts only individual delivery. In other words, the server is provided with data holding means such as melody database which holds usually a great amount of melody data in such a manner that it can be added, updated and retrieved, and means 211, 212 for delivering one or more specified or selected melody data to subscribed determined portable telephones or undetermined portable telephones using dial Q2 via the wireless telephone line 202 in response to the data request which is made from the portable telephone 260 via the communication in 202 or based upon voluntary operation such as regular delivery.

Common exchange stations 250 which support wireless voice telephone line for the portable telephone is used as the communication line 202 (refer to Fig. 13). A plurality of exchange stations are provided for each of the base stations which are distributed at various areas. An antenna 251 which is in wirelessly communication with the portable telephones, a wireless unit which transmits or receives radio signals via the antenna and a wired unit 253 which communicates signals to and from the other exchange stations 250 and the server 210 are provided in each exchange station 250.

The portable telephone 260 (refer to Fig. 14) is substantially identical to the above-mentioned portable telephone 230 in its basic features except that the melody data downloading means 270 is introduced. Specifically, the portable telephone 260 includes a wireless communication antenna 231, communication circuit 238, speech microphone 235, speaker 237, key entry keyboard 232, memory 234 and scale generating circuit 236 similarly to the above-mentioned portable telephone 230. The portable telephone 260 is adapted to store the melody data and to play back it for alerting an incoming call. Although the connector 241 and external interface 242 may be provided, they are unnecessary for automatic entry function of the melody data due to the introduction of the melody data download means 270.

The melody data download means 270 comprises a switch circuit 271; speech processing circuit 272; and a data entry circuit 273, which are inserted into a signal line which couples the communication circuit 238 with the digital signal processor 223; and a download routine 274 which is installed in the digital signal processor 233.

The switch circuit 271 is adapted to switch the signal destination of the communication circuit 238 to any one of the speech processing circuit 272 and the data entry circuit 273 in response to a control signal from the digital signal processor 233. It usually sends the signal to the speech processing circuit 272. The speech processing circuit 272 is adapted to process usual speech signals and to orientate a series of packets (data transfer units) or conducts a proper compression and decompression processing in association with the speech routine.

The data entry circuit 273 includes a decoding circuit which is compatible to sophisticated coding for accurately receiving the digital melody data and a buffer for conducting error correction having a high correcting capacity and for timing adjustment.

When the download mode is selected by the actuation of the keys on the keyboard 232, the download routine 274 is started to cause the switch circuit 271 to switch the signal destination to the data entry circuit 273 and to conduct data entry from the data entry circuit 273. Such a melody data download means 270 is adapted to appropriately and selectively receive the melody data which has been delivered via the switch station 250, that is wireless telephone circuit, at the antenna 231, communication circuit 238, switch circuit 271, data entry circuit 273 and the download routine 274.

The download routine 274 is adapted to write the melody data which is received at the antenna 231 and the communication line 238 to the relevant storage area of the memory 234 after it was entered via the data entry circuit 273. When the index number of the melody data is entered by the actuation of the keyboard 232 in the download mode, a melody data delivery request is sent to the server 210 via the switch station 250 by preparing a data request including the index number in a given format is prepared and by sending it via the communication circuit 238 and the antenna 231.

In order to support the download when there is no key actuation of the index number in addition to the above-mentioned operation, that is, the download of the melody data corresponding to the key actuation of the index number, the download routine 273 is operated as follows: That is, it sends a melody data request which does not specify the index number to the server 210 via the communication line 202 and continues to receives a piece of melody data as well as consecutive melody data which is fed from the server 210 via the communication line 202.

The received melody data is not immediately written in the relevant area of the memory 234, but is temporarily stored in the digital signal processor 233 or the other storage area of the memory 234. The melody data is sequentially fed to the scale generating circuit 236, starting from the processible part, so that playing back of the melody is conducted during reception or immediately thereafter. When a given key, for example a key "*" is depressed during playing back, the temporarily stored melody data is transferred to the relevant storage area. Determination is made depending upon the actuation of the keyboard whether or not the receiving and playing back melody data is to be immediately written in the relevant area of the memory 234. The download routine 273 is programmed to enable such operation.

Use and operation of the melody data entry system for the portable telephone of the embodiment will be described.

Firstly, download of the melody data specifying the index number will be described and then download of the melody index specifying no index number will be described.

When the user desires to change the melody data in the portable telephone 260, he or she enters the directory number of the server 210 by actuating the keyboard 232 to bring the portable telephone into a communicable state with the server 210. He or she types a proper password by actuating the keyboard 232 in accordance with the voice guide fed from the server 40 and generated by the speaker 237. After confirmation of the password, he or she actuates a mode presetting key on the keyboard 232 to bring the mode of operation of the portable telephone into the download mode of the melody data.

Since voice guidance promoting entry of the index number of the melody data or its guidance is displayed on a liquid crystal display (not shown) by the program processing of the download routine 274 of the digital signal processor 233, the user responds it to look at a brochure on which the melody data is printed for selecting desired melody and types the index number of the melody data via the keyboard 232. The information source of a brochure etc. may be any matter if it provides index numbers irrespective of whether or not the code of various melody data is printed, or there is code or not. An index number should be uniquely assigned to each melody data.

When the completion of the index number entry is informed to the digital signal processor 233 by the actuation of the keyboard 232, the connection designation of the switch circuit 271 is switched from the speech processing circuit 272 to the data entry circuit 273 and the data request including the just typed index number is fed from the digital signal processor 233 to the switch station 250 via the antenna 231. In such a manner, a request of the download of the melody data is individually made from each portable telephone 260 to the server 210 via the wireless telephone line 202.

The relevant melody data is retrieved from the melody database 213 based upon the index number in the server 210 which received it, and complete melody data including all codes is fed to the corresponding portable telephone 260 via the communication line 202 for returning it.

When the melody data is fed to the portable telephone 260, it is entered to the digital signal processor 233 via the communication line 238 and the data entry circuit 273 by the operation of the download routine 273 and is written into the relevant area of the memory 234.

Thus, the melody data in the portable telephone 260 can be easily rewritten only by entering a telephone number, mode presetting and index number through key actuation without necessity of tedious manual entry of codes.

Download of the melody data which is conducted without specifying the index number will now be described.

When a user does not have any melody code brochure, he or she who desires to change the melody data in the portable telephone 260 operates the portable telephone 230 as follows: He or she types directory number or password through the keyboard 232 to establish the wireless connection with the server 210 and actuates a mode presetting key and the like of the keyboard 232 to bring the mode of operation of the portable telephone 260 into the download mode of the melody data. At this time, a mode which requires no typing or the index number is selected.

By doing so, the signal destination of the switch circuit 271 is switched from the speech processing circuit 272 to the data entry circuit in accordance with the operation of the download routine 274 in the digital signal processor 233 and a data request specifying no index number is transmitted to the server 210. In response to this, various melody data are sequentially fed to the portable telephone from the server 210 via the communication line 202.

Since the user can listen to the sequentially played back sounds of the melody data from the speaker 237 of the portable telephone 260, the user actuates a given key during the playing back of the melody or until the next playing back is started if he or she finds favorite melody. In response to this, the relevant melody data is written in the relevant storage area of the memory 234 in the portable telephone 260 by the digital signal processor 233. Rewriting of the melody data is thus achieved. If the user thinks that there are other more favorite melodies, reception and playing back of the melody data is continued for listening to the played back melodies.

When the download mode is terminated by actuating the other key on the keyboard 232 at appropriate time, the connecting destination of the switch circuit 271 is switched from the data entry circuit 273 to the speech processing circuit 272 again and the operation of the call routine 233a is resumed so that the operation state of the portable telephone 260 is returned to an original state. When an incoming call from the other telephone is received, an incoming call alert sound with new melody is generated.

Since new melody can be selected while listening the various melodies by simple key actuation for entering a directory number and mode setting even if the user carries the portable telephone 260 without carrying any melody code brochure, the melody data of the portable telephone 260 can be easily rewritten without tedious working for entering codes of the melody.

### (Modification of seventh embodiment)

The portable telephone 280, the block diagram of which is shown in Fig. 15 is substantially identical with the above-mentioned portable telephone 260 except that the melody data download means 270 of the hardware is replaced with a melody data download means 290 of the software, which is incorporated in the digital signal processor 233.

A speech processing routine 292 of the melody data download means 290 is installed by a program for the operation of a speech processing circuit 272. A data entry routine 293 is installed by a program for the operation of a data entry circuit 273. The switching operation corresponding to a switch circuit 271 is performed by a download routine 274 or an alternative selection of either of the speech processing routine 292 and the data entry routine 293 in a main routine (not shown). The download routine 274 may be the same as that of the portable telephone 260.

This portable telephone 280 is also used similarly to the portable telephone 260.

### (Other features)

Although the download routine 274 conducts overwriting on the relevant area of the memory immediately after selection of writing in the above-mentioned seventh embodiment, the download routine may provide a voice or display guidance requesting an operation for confirming rewriting after the completion of one melody prior to overwriting. The download routine 274 and the like may not consist of only single routine, but also a plurality of associated routines, which are installed. If all melody data of one number is not temporarily stored, its index number is held and a request of data specifying the index number may be transmitted when writing is selected. In order to restricting the classification of the melodies to some extent prior to transmission of the request of data specifying no index number, a selection menu may be displayed or a voice guidance promoting the selection may be issued.

The removable cable 224 is fixed to the information terminal 220 and is removable from the portable telephone 230 in the foregoing sixth embodiment while the removable cable 224 may be removable from both the information terminal 220 and the portable telephone 230. For example, an appropriate connector may be also connected to the end of the information terminal 220.

In any embodiments, the keyboard 232 is not limited to push key type, and may be any actuatable member such as rotatable wheel or tiltable stick.

The digital signal processor 233 maybe a versatile processor, a wired logic, or the combination thereof if it is a signal processing circuit having an enough processing capacity.

The memory 234 is not limited to non-volatile memory such as flash memory, may be RAM and the like,which is backed up with batteries.

It is apparent from the foregoing description that the portable telephone which is the first solving means of the present invention makes it possible to substantially automatically enter new melody data for rewriting without increasing the exterior parts since the melody data can be received as optical signals via existing connectors. As a result, an advantageous effect is provided that a portable telephone in which the melodies can be easily changed can be implemented.

The portable telephone which is the second solving means of the present invention provides an advantageous effect that a portable telephone in which the melodies can be easily changed can be implemented since a common player can rewrite the melody data.

The portable telephone which is the third solving means of the present invention makes it possible to reenter any time the melody data which is stored in an external existing audio recording and playing back device since the melody data can be externally transmitted similarly to analog audio signals via existing connectors. As a result, there is provided an advantage effect that a portable telephone in which the melodies can be easily changed can be implemented.

In the portable telephone of the fourth solving means of the present invention, the melody data which is desired to save is automatically read from storing means and the reentered melody data is automatically returned to the storing means. There is provided an advantageous effect that a portable telephone in which erased melody can be easily recovered and the melodies can be easily changed is implemented.

In the portable telephone of the fifth solving means of the present invention, new melody data for rewriting can be substantially automatically entered without any necessity to increase the housing since a bar code reader is integrally incorporated. As a result, there is provided an advantageous effect that a portable telephone in which the melodies can be easily changed.

Since only a given printed matter which is easily available and is easy to carry is required for rewriting the melody data in the portable telephone of the sixth solving means of the present invention, there is provided an advantageous effect that a portable telephone in which the melodies can be easily changed.

Since correct melodies can be listened for confirmation in the portable telephone of the seventh solving means of the present invention, there is provided an advantageous effect that the melodies of the portable telephone can be easily and properly changed.

Since the melody sound for confirming the bar code read content can be discriminated from the melody sound for alerting an incoming call in the portable telephone of the eighth solving means of the present invention, there is provided an advantageous effect that a portable telephone in which the changed of the melodies as well as its confirmation is easily conducted and an incoming call can be positively responded during working can be implemented.

Since the melody data is downloaded with less actuation and its operation can be easily conducted by using no smaller actuating members of the portable telephone, but larger actuating members of the information terminal in the melody data entry system for the portable telephone which is the ninth solving means of the present invention, there is provided an advantageous effect that the melodies can be easily changed.

Since the melody data is downloaded with less actuation and the melody can be confirmed without any brochure in the portable telephone of the tenth solving means of the present invention, there is provided an advantageous effect that the melodies can be easily changed at any places.

## Claims

1. A portable telephone including means for storing therein melody data of an incoming call alert sound and a connector through which analog audio signals can be externally transmitted, **characterized in that** said telephone includes a photo receiving member with which is provided said connector so that said member can receive light.

2. A portable telephone as defined in Claim 1, **characterized in that** said telephone includes means for entering digital audio data through said photo receiving member and for writing this data into said storing means as said melody data.

3. A portable telephone including means for storing therein melody data of an incoming call alert sound and a connector through which analog audio signals can be externally transmitted, **characterized in that** said telephone includes a modulating and demodulating circuit which is connected to said connector for digitally modulating and demodulating said melody data.

4. A portable telephone as defined in Claim 3, **characterized in that** said telephone includes means for providing said melody data to the operation of said modulating and demodulating circuit by accessing to said storing means.

5. A portable telephone including means for storing therein melody data of an incoming call alert sound and playing back means for reading the melody data stored in said storing means to play back the melody, **characterized in that** telephone includes a member for reading bar code is secured to the housing of the portable telephone.

6. A portable telephone as defined in Claim 5, **characterized in that** said telephone includes melody data accepting means for entering data through said reading member and for writing the read data to said storing means as the melody data.

7. A portable telephone as defined in Claim 6, **characterized in that** said telephone includes means for playing back the melody data to be written when it is written to said storing means.

8. A portable telephone as defined in Claim 7, **characterized in that** said telephone includes means for causing the melody data which is provided to said playing back means to be subjected to given processing when said playing back means is operated in response to an incoming call during the operation of said melody data accepting means.

9. A melody data entering system for portable telephones comprising a device for delivering melody data, which is connected to a communication line, information terminal which is connected to said communication line for receiving the melody data from said delivering means and a portable telephone which is capable of entering melody data through an externally connecting connector, in which said information terminal is connected to said portable telephone via said connector in such a manner that data can be transmitted therethrough and in which an instruction to transmit the melody data is entered from an actuated entry unit of said information terminal.

10. A portable telephone including wireless communicating means, an actuating unit of push buttons etc., means for storing therein melody data of incoming call alert sound and playing back means for reading said melody data from said storing means to play back the melody, **characterized in that** said telephone includes means for causing said playing back means to play back the melody data while the melody data is continuously received via said communicating means and for conducting the selection of the melody to be written into relevant area of said storing means responsive to the actuation of said actuating unit.
